**Europäisches Patentamt**

**European Patent Office**

**Office européen des brevets**

(11) Publication number: **0 133 745**

**B1**

# EUROPEAN PATENT SPECIFICATION

(45) Date of publication of patent specification: **26.10.88**

(51) Int. Cl.⁴: **G 21 C 3/32**

(21) Application number: **84304229.2**

(22) Date of filing: **22.06.84**

(54) **Nuclear reactor fuel assemblies.**

(30) Priority: **03.08.83 US 520022**

(43) Date of publication of application:
**06.03.85 Bulletin 85/10**

(45) Publication of the grant of the patent:
**26.10.88 Bulletin 88/43**

(84) Designated Contracting States:
**CH DE FR GB IT LI**

(56) References cited:
**EP-A-0 025 392**
**DE-A-2 724 059**
**FR-A-2 171 279**
**FR-A-2 246 939**
**FR-A-2 286 475**
**GB-A-1 480 932**
**US-A-4 229 259**

(73) Proprietor: **THE BABCOCK & WILCOX COMPANY**
**1010 Common Street P.O. Box 60035**
**New Orleans Louisiana 70160 (US)**

(72) Inventor: **King, Raymond A.**
**4 Dogwood Place**
**Lynchburg Virginia 24502 (US)**
Inventor: **Larson, Jeffrey G.**
**Rte. 1 Box 261D**
**Rustburg Virginia 24588 (US)**
Inventor: **Walton, Lewis A.**
**102 Lake Ridge Drive**
**Forest Virginia 24551 (US)**

(74) Representative: **Cotter, Ivan John et al**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to nuclear reactor fuel assemblies.

A known type of nuclear reactor fuel assembly comprises elongated cylindrical fuel rods supported in a bundle, the fuel rods being substantially parallel to each other. Such a fuel assembly typically employs spacer grids located at regular intervals along its length. These spacer grids are typically made from slotted thin metal strips interlocked in an egg crate arrangement and joined at their intersections by welds. The spacer grids help to locate and support the fuel rods. Specifically, the fuel rods are passed axially through the square openings formed by the interlocking metal strips of the spacer grid, and are positioned by hard (i.e. inflexible) and soft (i.e. flexible) stops formed from the side walls in each grid cell.

In present practice, control rod guide tubes and an instrument guide tube are interspersed in a regular pattern through the fuel rod array. the guide tubes are unfueled elongated cylinders similar to the fuel rods.

In a typical arrangement, a 15 X 15 array of fuel rods is employed, in which the center position in the array is reserved for a central instrument guide tube. Another sixteen positions are provided with guide tubes for use as control rod locations.

The control rod guide tubes are open at their upper ends to permit passage of control rods into the fuel assembly for the purpose of regulating the fission reaction. Similarly, the instrument guide tube is open at its lower end to permit passage of an instrument probe into the fuel assembly for the purpose of monitoring the neutronic and thermal conditions in the fuel assembly during operation. Typically, the guide tubes are rigidly attached by threaded mechanical joints or welds at each end to upper and lower end fittings.

These end fittings consist of a grillage with openings to accommodate the guide tube ends and to permit the passage of coolant flow though the fuel assembly. Other structural features are typically attached to these grillages to facilitate the positioning of the fuel assembly in the reactor core and to interface with handling devices. One or more helical springs are mounted on the upper end fitting to prevent fuel assembly lift-off caused by the upward flow of coolant through the fuel assembly.

In many current fuel assembly designs, the spacer grids discussed above are rigidly fixed to the guide tubes either by welding or by mechanical attachment. See, for example, GB—A—1 480 932, which discloses a nuclear reactor fuel assembly employing a plurality of spacer grids located along the length of the fuel asembly, a grid being rigidly fixed to a control rod guide tube by means of two sleeves which have portions which extend into the mesh of the grid to prevent rotational movement, and the sleeves being welded to the guide tube and bearing against respective opposite sides of the grid.

At variance with this the foregoing rigid design is the floating grid arrangement shown in the Babcock & Wilcox fuel assembly design, in which no mechanical attachment or weldment is provided. Instead, the spacer grids are left free to slip axially along the guide tubes to accommodate minor changes in the axial length of the fuel rods during irradiation.

Spacer sleeves located around the central instrument guide tube are designed to prevent excessive axial relocation of the spacer grids during irradiation. These sleeves are typically located axially between the spacer grids, i.e. in the axial intervals between spacer grids, and are sized to be shorter than the distance between adjacent spacer grids, leaving a gap for axial relocation of the spacer grids.

the spacer grids of the Babcock & Wilcox design have been found to "float" upward on the fuel rod bundle during irradiation. This occurs during the third cycle with grids made of Inconel, and during the first cycle with Zircaloy grids. The Zircaloy grids also move more once they begin to slip going to the limits provided by the spacer sleeves rather than moving only a few mm (fraction of an inch one inch=25.4 mm) as occurs with the use of Inconel as a grid material.

The central instrument tube is position in the spacer grid by saddles which are formed from the spacer grid strips. These saddles are dimples or projections which protrude from the top and bottom edge of the central spacer grid strips. These saddles are relatively weak and can be turned inside out by the spacer sleeves if sufficient upward force is exerted by the grid. The Zircaloy grid saddles are only about one-half as strong as the Inconel grid saddles.

The spacer sleeves bear on the top and bottom edges of the upper and lower saddles respectively at different times in an operating cycle. If a high axial load is applied to the spacer sleeves by the grid, the saddles may fail as cantilever beams turning inward and damaging the grid. A relative displacement of the spacer grid with respect to adjacent fuel assemblies may occur, causing possible fretting of fuel rods and a more uneven reactor core geometry. A need therefore arises to find a means for limiting spacer grid axial displacement more than is possible presently, in order to ensure grid overlap between adjacent fuel assemblies.

Several possible arrangements have been investigated to resolve this problem. Direct attachment means, such as welding the spacer grids to the guide tubes, is undesirable for two reasons: the manufacturing sequence is severely disrupted, and the basic advantages associated with a floating grid arragment are lost. Swaging the central instrument guide tubes above and below the grids in order to limit travel is a feasible alternative, but also significantly alters the fabrication sequence.

The best approach is to retain the floating grid concept, lengthen the spacer sleeve to achieve the grid positioning improvement required, and strengthen the central instrument guide tube saddles, (especially on the Zircaoloy spacer grid) to carry the resulting loads.

The present invention provides a nuclear reactor fuel assembly employing a plurality of spacer grids located along the length of the fuel assembly, the spacer grids being axially movable in relationship to at least one guide tube, the axial movement being limited by a plurality of spacer sleeves arranged coaxially about respective axial portion of a central instrument guide tube, characterised by at least one spacer grid insert positioned between two spacer sleeves and coaxially about an axial portion of the central instrument guide tube within an opening of the said spacer grid, the insert including a shoulder along the axially upper end thereof.

The invention will now be further described, by way of illustrative and non-limiting example, with reference to the accompanying drawing, in which:

Figure 1 is a side view of a portion of a central instrument guide tube of a Babcock & Wilcox nuclear reactor fuel assembly designed in accordance with the floating grid concept;

Figure 2 is a side view of a portion of a central instrment guide tube and a spacer grid insert of a nuclear reactor fuel assembly embodying the invention;

Figures 3 and 4 are perspective views of respective alternative spacer grid inserts that can be used in embodiments of the invention; and

Figure 5 is a cross-sectional view of another alternative spacer grid insert that can be used in an embodiment of the invention.

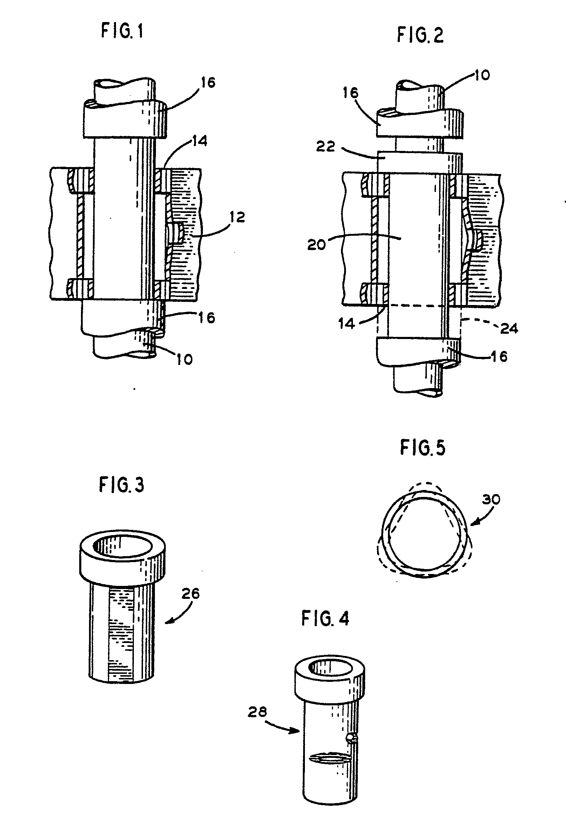

Referring now to the drawing, wherein like reference numerals designate like or corresponding parts throughout the several views, Figure 1 shows a portion of a central instrument guide tube 10 of a nuclear reactor fuel assembly designed in accordance with the floating grid concept. The portion depicted in the drawing is at an elevation at which a spacer grid 12 position the central instrument guide tube 10. As described above, the spacer grid 12 comprises thin metal slotted strips, fabricated in egg crate fashion, to position the fuel rods in the fuel assembly. At the central instrument guide tube 10, the spacer grids 12 have instrument guide tube saddles 14, which are dimples or projections protruding from the top and bottom of the edge of a spacer grid, and contacting the instrument guide tube. A spacer sleeve 16 is positioned coaxially about the instrument guide tube 10 and between two axially adjacent spacer grids or above and below the uppermost and lowermost spacer grids respectively. In the current art, the spacer grids 12 may move upward on the instrument guide tube during operating cycles and exert sufficient axial load on the spacer sleeve 16 to cause the instrument guide tube saddles 14 to fail as cantilever beams turning inward and damage the spacer grid 12.

Figure 2 shows a spacer grid insert 20 which is positioned coaxially about the central instrument guide tube 10. An insert shoulder 22 maintains downward engagement of the insert 20 with the grid 12 during fabrication of the fuel assembly and early in the operating life of the assembly. Upward engagement of the insert with the grid can be ensured by means of a collar 24 connected to the insert below the grid by, for example, spot welding. Alternatively, the insert can be simply made long enough to prevent disengagement. The insert 20 can also be welded to the saddles 14. In each case, the spacer grid insert 20 carries all through-grid loads while the instrument guide tube saddles 14 are strengthened against grid induced loads by the internal support provided by the insert and by the decreased overhang of the saddles 14 which lessens the cantilever effect.

One preferred configuration is to size the spacer grid insert 20 so that it has the same outside diameter as the control rod guide tubes. This allows control rod guide tube saddles to be substituted for the instrument guide tube saddles 14 in the central grid cell.

Alternatively, the saddles 14 can be eliminated altogether and a squared-off insert 26 can be used as shown in Fig. 3.

One distinct advantage of the inserts is that no significant change to the fuel assembly fabrication process is required in order to incorporate the improved grid-positioning control. The spacer grid inserts 20 are placed into the spacer grids 12 prior to fuel bundle assembly. If a permanent attachment scheme is employed, this attachment operation would also be done at this point in the fabrication process. The spacer grids 12, now with the spacer grid inserts installed, are then keyed open and installed into the fuel assembly fixture in a manner well known in the art, with the exception that part-lengths keys must be used in the two center cell rows blocked by the insert. The fuel rods, spacer sleeves 16, and control rod guide tubes and central instrument guide tube 10 are then loaded in the conventional manner. The spacer sleeves 16 may be longer than the lengths previously employed to achieve the desired grid positioning.

The part-length keys discussed above, for use in the center cell rows, may be eliminated and replaced by standard keys if passages are provided through the spacer grid insert. Fig. 4 shows a spacer grid insert 28 modified by the inclusion of such passages.

Spacer grid inserts in accordance with the present invention prevent the instrument guide tube from being as rigidly restrained at the spacer grid elevations as they currently are. If a fretting problem results, alternate restraint means can be provided by ovalizing the free end of the insert as shown in Fig. 5, creating a modified insert 30 characterized by three protruding portions arranged at about 120° with respect to each other. Thus, a spacer grid insert in accordance with the present invention provides a simple, economic means for using a floating grid arrangement even if greater position restraint is required. Undesirable structural changes such as welding or swaging of the instrument guide tubes is avoided, and the problem of axial load deformation of the instrument guide tube saddles is solved. In addition, the fabrication process is not significantly altered by the practice of the invention.

## Claims

1. A nuclear reactor fuel assembly employing a plurality of spacer grids (12) located along the length of the fuel assembly, the spacer grids (12) being axially movable in relationship to at least one guide tube, the axial movement being limited by a plurality of spacer sleeves (16) arranged coaxially about respective axial portions of a central instrument guide tube (10), characterised by at least one spacer grid insert (20, 26, 28, 30) positioned between two spacer sleeves (16) and coaxially about an axial portion of the central instrument guide tube (10) within a respective opening of one of the spacer grids (12), the insert (20, 26, 28, 30) including a shoulder (22) along the axially upper end thereof.

2. A fuel assembly according to claim 1, wherein the insert (20, 26, 28, 30) includes a collar (24) located at the axially lower end thereof.

3. A fuel assembly according to claim 1 or claim 2, wherein the insert (20, 26, 28, 30) has an outside diameter which is substantially the same as the outside diameter of control rod guide tubes of the assembly.

4. A fuel assembly according to claim 1 or claim 2, wherein the insert (26) has a squared-off outside surface.

5. A fuel assembly according to any one the preceding claims, wherein the insert (28) includes a passage along two sides thereof, the passages being offset axially from each other along the insert and having respective longitudinal axes at about 90° from each other.

6. A fuel assembly according to any one of the preceding claims, wherein the insert (30) includes an ovalized outer surface having three protruding portions arranged at about 120° with respect to each other.

## Patentansprüche

1. Kernreaktorbrennstoffanordnung mit einer Mehrzahl von Abstandsgittern (12), die längs der Brennstoffanordnung angeordnet sind und axial im Verhältnis zu mindestens einem Führungsrohr bewegbar sind, wobei die axiale Bewegung von einer Mehrzahl von Abstandshülsen (16) beschränkt ist, die koaxial um entsprechende Axialteile eines Zentralinstrumentführungsrohres (10) angeordnet sind, gekennzeichnet durch mindestens einen Abstandgittereinsatz (20, 26, 28, 30), der zwischen zwei Abstandshülsen (16) und koaxial um ein axiales Teil des Zentralinstrumentführungsrohres (10) innerhalb einer entsprechenden Öffnung eines der Abstandsgitter (12) angeordnet ist, wobei der Einsatz (20, 26, 28, 30) eine Schulter (22) längs seines axial oberen Endes aufweist.

2. Brennstoffanordnung nach Anspruch 1, wobei der Einsatz (20, 26, 28, 30) einen Kragen (24) aufweist, der an seinem axial unteren Ende angeordnet ist.

3. Brennstoffanordnung nach Anspruch 1 oder Anspruch 2, wobei der Einsatz (20, 26, 28, 30) einen Außendurchmesser hat, der im wesentlichen der gleiche wie der Außendurchmesser der Steuerstangenführungsrohre der Anordnung ist.

4. Brennstoffanordnung nach Anspruch 1 oder Anspruch 2, wobei der Einsatz (26) eine abgeflachte Außenoberfläche aufweist.

5. Brennstoffanordnung nach einem der vorhergehenden Ansprüche, wobei der Einsatz (28) längs seinen zwei Seiten einen Durchgang aufweist, wobei die Durchgänge längs des einsatzes axial voneinander versetzt sind und entsprechende Längsachsen bei etwa 90° zueinander haben.

## Revendications

1. Assemblage combustible pour réacteur nucléaire utilisant une série de grilles d'entretoisement (12) placées sur la longueur de l'assemblage combustible, les grilles d'entretoisement (12) étant mobiles axialement par rapport à au moins un tube de guidage, le mouvement axial étant limité par une série de manchons d'entretoisement (16) disposés coaxialement autour de tronçons axiaux respectifs d'un tube de guidage d'instrument central (10) caractérisé par au moins une pièce rapportée de grille d'entretoisement (20, 26, 28, 30) placée entre deux manchons d'entretoisement (16) et coaxialement autour d'un tronçon axial du tube de guidage d'instrument central (10) à l'intérieur d'une ouverture de l'une des grilles d'entretoisement (12), la pièce rapportée (20, 26, 28, 30) comportant un épaulement (22) le long de son extrémité axialement supérieure.

2. Assemblage combustible selon la revendication 1, dans lequel la pièce rapportée (20, 26, 28, 30) comporte un collier (24) situé à son extrémité axialement inférieure.

3. Assemblage combustible selon la revendication 1 ou la revendication 2, dans lequel la pièce rapportée (20, 26, 28, 30) a un diamètre extérieur que est sensiblement égal au diamètre extérieur de tubes de guidage de barre de réglage de l'assemblage.

4. Assemblage combustible selon la revendication 1 ou la revendication 2, dans lequel la pièce rapportée (26) présente une surface extérieure à pans coupés.

5. Assemblage combustible selon l'une quelconque des revendications précédentes, dans lequel la pièce rapportée (28) présente un passage le long de deux de ses côtés, les passages étant décalés axialement l'un par rapport à l'autre le long de la pièce rapportée et présentant des axes longitudinaux respectifs décalés d'environ 90° l'une par rapport à l'autre.

6. Assemblage combustible selon l'une quelconque des revendications précédentes, dans lequel la pièce rapportée (30) présente une surface extérieure ovalisée comportant trois tronçons saillants disposés à environ 120° les uns des autres.

FIG.1

16

14

12

16

10

FIG.2

16

10

22

20

14

24

16

FIG.3

26

FIG.5

30

FIG.4

28